# EUROPÄISCHE PATENTSCHRIFT

(11) **EP 0 577 236 B1**
(45) Veröffentlichungstag und Bekanntmachung des Hinweises auf die Patenterteilung: **03.04.1996**
(21) Anmeldenummer: 93250186.9
(22) Anmeldetag: 23.06.1993
(51) Int. Cl.: C05F 17/02

(54) **Einrichtung zur Belüftung von Intensiverottereaktionen**
Device for aeration of intensive fermentation processes
Dispositif d'aération des réactions de fermentation intensives

(30) Priorität: 02.07.1992 DE 9208955 U
(43) Veröffentlichungstag der Anmeldung: 05.01.1994
(73) Patentinhaber: ML Entsorgungs- und Energieanlagen GmbH, D-40880 Ratingen (DE)
(72) Erfinder: Vollmer, Fridel, D-44652 Herne (DE); Dolle, Lothar, D-44627 Herne (DE)

(56) Entgegenhaltungen:
- EP-A- 0 255 467
- DE-A- 2 809 344

## Beschreibung

Die Erfindung betrifft eine Einrichtung zur Belüftung von Intensivrottereaktoren gemäß dem Oberbegriff des Schutzanspruchs 1.

Aus der DE 36 31 170 C2 ist ein Verfahren und eine Vorrichtung zur intensiven Fermentierung von Bio-Abfällen bekannt. Als Rottereaktoren werden dabei containerförmige Behälter eingesetzt, die kontrolliert von Frischluft durchströmt werden, die je nach Umgebungstemperatur im Bedarfsfall vorgewärmt wurde. Die Abluft aus den Rottebehältern wird durch eine Rohrleitung abgezogen und vor ihrer Abgabe in die Umgebung in einem Biofilter desodoriert. Die Luftzufuhr erfolgt unter der Kontrolle einer elektronischen Steuerung, die über Meßfühler Angaben über die Temperatur und/oder Feuchtigkeit in den Rottebehältern erhält.

Nähere Einzelheiten über die zweckmäßige bauliche Gestaltung der containerförmigen Rottebehälter, insbesondere über die Ausbildung eines Lochbodens für die Luftzufuhr, die Zu- und Abluftanschlüsse, die Abwasseranschlüsse sowie die verschließbaren öffnungen zur Be- und Entladung sind aus der DE 40 05 534 C1 und DE 40 05 535 C1 bekannt.

Bei dem Intensivrotteverfahren gemäß DE 36 31 170 C2 ist vorgesehen, den Rotteprozeß in einer Vielzahl von Rottebehältern gleichzeitig durchzuführen, wobei der zeitliche Rottefortschritt in den einzelnen Behältern durchaus unterschiedlich sein kann, da die Prozeßführung in jedem Rottebehälter individuell erfolgt. Hierzu werden die Behälter in einer sogenannten Rottestation aufgestellt, die Ventilatoren und Rohrleitungsanschlüsse für die Zuluft, Abluftleitungsanschlüsse für Abluft, eine Biofilteranlage, Auffangeinrichtungen zur Sammlung und Abführung von Abwasser, eine Einrichtung zur Luftvorwärmung und eine elektronische Regeleinrichtung zur Prozeßsteuerung enthält. Alle diese Rggregate sind separat aufgestellt und gegebenenfalls in einem entsprechenden Gebäude untergebracht. Die Rohrleitungs- und Signalleitungsanschlüsse sind weitgehend ortsfest verlegt.

Da die Errichtung und Installation einer solchen Rottestation unter Baustellenbedingungen erfolgen muß, ist dies mit erheblichen Kosten verbunden. Bei Großanlagen für die Kompostierung steht der dafür erforderliche Aufwand in einem sinnvollen Verhältnis zum Gesamtaufwand für eine solche Anlage. Dagegen führt die bisherige Bauweise bei Kleinanlagen mit einer relativ geringen Zahl von Rottebehältern zu einem unverhältnismäßig hohen Aufwandsanteil.

Aufgabe der Erfindung ist es, eine Einrichtung zur Belüftung von Intensivrottebehältern gemäß dem Oberbegriff des Schutzanspruchs 1 dahingehend weiterzubilden, daß deren Herstellung verbilligt wird.

Gelöst wird diese Aufgabe durch die kennzeichnenden Merkmale des Schutzanspruchs 1. Vorteilhafte Weiterbildungen der Erfindung sind in den Unteransprüchen 2 bis 6 angegeben.

Der Grundgedanke der Erfindung liegt darin, sämtliche Aggregate der Belüftungseinrichtung einschließlich Regeleinrichtungen und Leitungsanschlüssen zur Ankopplung an die einzelnen Rottereaktoren in einem unter Werkstattbedingungen hergestellten und dadurch kostengünstigen Gehäuse unterzubringen, das transportabel ist. Dadurch können auch sämtliche Verbindungsleitungen zwischen den einzelnen Aggregaten unter Werkstattbedingungen vorgefertigt und installiert werden. Die dadurch ermöglichte Standardisierung führt zur Serienfertigung und zu entsprechenden Rationalisierungs- und Kostenvorteilen. Die modulartige Bauweise in Form von Containern ermöglicht auf der einen Seite die einfache Bildung von Belüftungsanlagen mit hoher Leistung für größere Kompostieranlagen, da lediglich entsprechend viele derartige Container nebeneinander oder übereinander aufgestellt werden müssen; Kapazitätserweiterungen können einfach durchgeführt werden. Auf der anderen Seite bleibt ein solcher Container auch nach seiner Aufstellung transportabel und kann bei Bedarf ohne großen Aufwand an einen anderen Einsatzort gebracht werden.

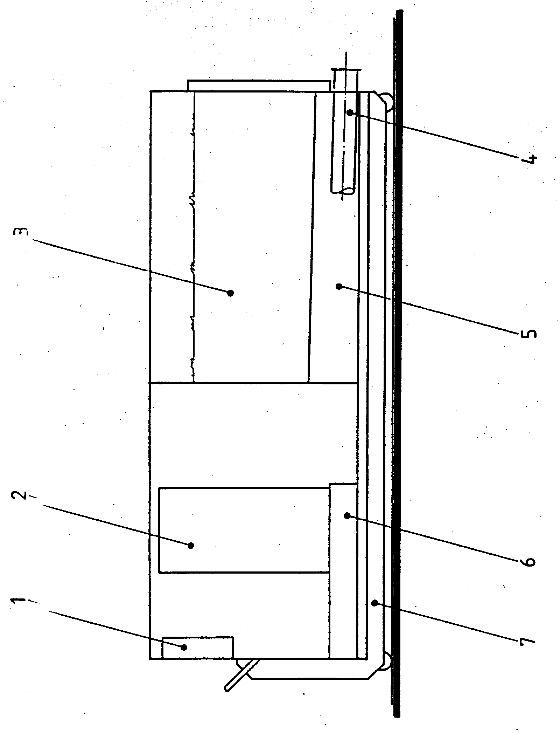

Anhand eines in der Figur dargestellten schematischen Ausführungsbeispiels wird die erfindungsgemäße Einrichtung nachfolgend näher erläutert.

Die Abbildung zeigt eine Ausführung der erfindungsgemäßen Belüftungseinrichtung auf der Basis eines 20-Fuß-Containers 1 Fuß = 0.30 m. In einem Klimagerät 2 wird von außen angesaugte Luft bei Bedarf vorgewärmt und von einem Ventilator durch ein Zuluftrohr 4 in die nicht dargestellten Intensivrottereaktoren geblasen. Die Abluft aus den Reaktoren wird von einem zweiten Ventilator im Klimagerät 2 durch ein Abluftrohr, das z.B. parallel zum Zuluftrohr 4 liegt, angesaugt, gekühlt und zur Desodorierung durch den Biofilter 3 geblasen. Das beim Abkühlen im kühlaggregat 1 ausfallende Kondensat wird in einem Tank 6 gesammelt.

Vorzugsweise ist vorgesehen, die bei der Kühlung anfallende Abwärme möglichst nicht nach außen abzugeben, sondern im Bedarfsfall zur Vorwärmung der Frischluft zu verwenden. Zweckmäßigerweise sollte daher der Wärmetauscher für die Kühlung der Abluft gleichzeitig eine Abgabemöglichkeit für Wärme an die angesaugte Zuluft (klimagerät 2) aufweisen. Das Prozeßabwasser aus den Rottereaktoren wird durch ein Abwasserrohr, das ebenfalls parallel zum Zuluftrohr 4 angeordnet sein kann, in den Abwassertank 5 gepumpt. Das Kondensat und gegebenenfalls die Abwässer werden vorteilhaft mittels eines Pumpenaggregats und eines Zerstäubungsdüsensystems in die vorgewärmte Zuluft eingedüst, um so einen möglichst weitgehend abwasserfreien Betrieb zu erzielen. Dies ist deswegen möglich, weil die zugeführte Frischluft in der Regel nach nicht mit Wasser gesättigt ist. Gegen Wärmeverluste kann der Container, dessen tragende Basis mit 7 bezeichnet ist, ganz oder teilweise isoliert werden. Eine solche kompakte Baueinheit ist in der Lage, mehrere Bioreaktoren, die ebenfalls bevorzugt auf der Basis von 20-Fuß-Containern erstellt werden, mit der erforderlichen Prozeßluft zu ver- und entsorgen. Durch die Beschränkung auf wenige transportfähige Einheiten ist erfindungsgemäß die Möglichkeit gegeben, das gesamte Kompostiersystem, bestehend aus der Kompakteinheit zur Belüftung, den Intensivrottereaktoren und verbindenden Rohrleitungen, ortsveränderlich zu gestalten.

## Patentansprüche

1. Einrichtung zur Belüftung von Intensivrottereaktoren, enthaltend als Aggregate eine Ventilationsvorrichtung für die zuzuführende Frischluft, eine Vorrichtung zur Frischluftvorwärmung, eine Kühlvorrichtung zur Abkühlung der Abluft der Intensivrottereaktoren, ein Biofilter zur Desodorierung der abgekühlten Abluft, Auffangeinrichtungen für Kondenswasser aus der Abluft und für Abwasser aus dem Rotteprozeß, eine elektronische Regeleinrichtung zur Prozeßsteuerung sowie Rohrleitungsanschlüsse und Signalleitungsanschlüsse für Temperatur- und/oder Feuchtigkeitsfühler zur Verbindung mit den Intensivrottereaktoren,
dadurch gekennzeichnet,
daß die Rggregate in einem gemeinsamen transportablen containerformigen Gehäuse angeordnet sind, durch dessen Außenwände die Rohr- und Signalleitungsanschlüsse hindurchgeführt sind.

2. Einrichtung nach Anspruch 1,
dadurch gekennzeichnet,
daß das containerförmige Gehäuse aus Baustahl besteht und einen Korrosionsschutz aus einer Kunstharzbeschichtung aufweist.

3. Einrichtung nach Anspruch 1,
dadurch gekennzeichnet,
daß das containerförmige Gehäuse aus Edelstahl besteht.

4. Einrichtung nach einem der Ansprüche 1 bis 3,
dadurch gekennzeichnet,
daß das containerförmige Gehäuse wärmeisoliert ausgeführt ist.

5. Einrichtung nach einem der Ansprüche 1 bis 4,
dadurch gekennzeichnet,
daß für die Frischluftvorwärmung ein Wärmetauscher installiert ist, der die Abwärme bei der Kühlung der Abluft aufnimmt.

6. Einrichtung nach einem der Ansprüche 1 bis 5,
dadurch gekennzeichnet,
daß die Auffangeinrichtungen als Tanks ausgebildet sind und ein Pumpenaggregat sowie ein Zerstäubungsdüsensystem vorgesehen sind, mittels derer Kondenswasser und/oder Abwasser aus den Tanks in den Strom der zuzuführenden Frischluft eingedüst werden kann.

## Claims

1. An apparatus for aerating intensive rotting reactors, comprising as units a ventilation means for the fresh air being supplied, a means for preheating fresh air, a cooling means for cooling the exhaust air from the intensive rotting reactors, a biofilter for deodorising the cooled exhaust air, collecting means for condensed water from the exhaust air and for effluent from the rotting process, an electronic control means for process control and pipe connections and signal line connections for temperature and/or humidity sensors for connection to the intensive rotting reactors, characterised in that the units are arranged in a common, transportable, container-shaped housing, through the outer walls of which the pipes and signal line connections are passed.

2. An apparatus according to Claim 1, characterised in that the container-shaped housing is made of structural steel and has an anti-corrosion means consisting of a synthetic resin coating.

3. An apparatus according to Claim 1, characterised in that the container-shaped housing is made of special steel.

4. An apparatus according to one of Claims 1 to 3, characterised in that the container-shaped housing is heat-insulated.

5. An apparatus according to one of Claims 1 to 4, characterised in that a heat exchanger is installed for preheating the fresh air, which exchanger absorbs the waste heat upon the cooling of the exhaust air.

6. A means according to one of Claims 1 to 5, characterised in that the collecting means are constructed as tanks and a pump unit and an atomising nozzle system are provided, by means of which condensed water and/or effluent from the tanks can be sprayed into the flow of the fresh air which is being supplied.

## Revendications

1. Dispositif d'aération des réacteurs de fermentation intensive comportant, comme groupes, un dispositif de ventilation de l'air frais à amener, un dispositif de chauffage préalable de l'air frais, un dispositif de refroidissement destiné au refroidissement de l'air évacué des réacteurs de fermentation intensive, un biofiltre destiné à désodoriser l'air évacué et refroidi, des dispositifs de captage de l'eau de condensation de l'air évacué et de l'eau résiduaire du processus de fermentation, un dispositif électronique de régulation destiné à commander le processus ainsi que des raccordements de conduits et des bornes de conducteur de signalisation pour des sondes de température et/ou d'humidité destinées à être reliées aux réacteurs de fermentation intensive,
caractérisé
en ce que les groupes sont disposés dans une enveloppe commune transportable en forme de conteneur, à travers les parois extérieures de laquelle passent les raccordements de conduits et les bornes de conducteurs de signalisation.

2. Dispositif suivant la revendication 1,
caractérisé
en ce que l'enveloppe en forme de conteneur est en acier de construction et comporte une couche anti-corrosion en un revêtement de matière plastique.

3. Dispositif suivant la revendication 1,
caractérisé
en ce que l'enveloppe en forme de conteneur est en acier fin.

4. Dispositif suivant l'une des revendications 1 à 3,
caractérisé
en ce que l'enveloppe en forme de conteneur est calorifugée.

5. Dispositif suivant l'une des revendications 1 à 4,
caractérisé
en ce que pour le dispositif de préchauffage de l'air frais il est prévu un échangeur de chaleur qui absorbe la chaleur perdue lors du refroidissement de l'air évacué.

6. Dispositif suivant l'une des revendications 1 à 5,
caractérisé
en ce que les dispositifs de captage sont constitués sous la forme de cuves et il est prévu un groupe de pompage ainsi qu'un système de buses de pulvérisation au moyen desquels de l'eau de condensation et/ou de l'eau résiduaire peut être pulvérisée des cuves dans le courant d'air frais à amener.
